# EUROPEAN PATENT APPLICATION

(11) **EP 4 345 646 A1**
(43) Date of publication of application: **03.04.2024**
(21) Application number: 23199751.1
(22) Date of filing: 26.09.2023
(51) Int. Cl.: G06F 16/332, G06F 16/338, G06F 16/93

(54) **DOCUMENT SEARCHING SYSTEMS AND METHODS**

(30) Priority: 27.09.2022 AU 2022241473
(71) Applicant: Canva Pty Ltd., Surry Hills, New South Wales 2010 (AU)
(72) Inventor: CHENG, Zhifan, Surry Hills, NSW 2010 (AU)
(74) Representative: Chettle, John Edward

(57) **Abstract**

Described herein is a computer implemented method. The method includes receiving input that defines a search string and identifying, based at least in part on the search string, matching documents and matching pages. The method further includes displaying a matching documents user interface (UI) that includes at least one document object corresponding to a matching document; detecting selection of the document object; displaying a document pages user interface (UI) including at least one page object that corresponds to a page of the particular matching document; detecting selection of the page object; and displaying the selected page in a primary user interface (UI).

## Description

### TECHNICAL FIELD

Aspects of the present disclosure are directed to document searching systems and methods.

### BACKGROUND

Various computer applications provide mechanisms to search and view documents that are managed by or accessible to the application.

### SUMMARY

Described herein is a computer implemented method including: receiving input that defines a search string; causing a search to be performed, the search based at least in part on the search string, the search performed on a set of documents so as to identify matching documents and matching pages; displaying a matching documents user interface (UI), the matching documents UI including at least one document object, the or each document object corresponding to a matching document identified by the search; detecting a document selection user input selecting a particular document object, the particular document object corresponding to a particular matching document that has one or more pages; in response to detecting the document selection user input, displaying a document pages user interface (UI), the document pages UI including at least one page object, the or each page object corresponding to a page of the particular matching document; detecting a page selection user input selecting a particular page object, the particular page object corresponding to a particular page of the particular matching document; and in response to detecting the page selection user input, displaying the particular page in a primary user interface (UI).

### BRIEF DESCRIPTION OF THE DRAWINGS

In the drawings:
FIG. 1 is a diagram depicting a networked environment in which various features of the present disclosure may be implemented.
FIG. 2 is a block diagram of a computer processing system configurable to perform various features of the present disclosure.
FIG. 3 depicts client side operations involved in a document searching method.
FIG. 4 depicts server side operations involved in a document searching method.
FIG. 5 depicts an example search input user interface.
FIG. 6 depicts an example matching documents user interface.
FIG. 7 depicts an example document object with and without secondary user interaction.
FIGs 8 and 9 depict an example document pages user interface.
FIG. 10 depicts an example primary user interface.
FIG. 11 depicts an alternative example primary user interface.

While the description is amenable to various modifications and alternative forms, specific embodiments are shown by way of example in the drawings and are described in detail. It should be understood, however, that the drawings and detailed description are not intended to limit the invention to the particular form disclosed. The intention is to cover all modifications, equivalents, and alternatives falling within the scope of the present invention as defined by the appended claims.

### DETAILED DESCRIPTION

In the following description numerous specific details are set forth in order to provide a thorough understanding of the present invention. It will be apparent, however, that the present invention may be practiced without these specific details. In some instances, well-known structures and devices are shown in block diagram form in order to avoid unnecessary obscuring.

Many computer applications provide users with the ability to search for, store, and/or retrieve documents.

For some applications, document searching may be the primary (or sole) purpose of the application. This may be the case, for example, in the context of a cloud storage application or the like which is used to store and access files.

For other applications, document storage and retrieval may be one of various functions offered by an application. For example, an application may provide users with functionality for creating and editing documents as well as the functionality for storing, retrieving, and searching for documents. By way of specific example, an application may be document design application that allows users to create, edit, publish, share, and or perform other applications with respect to documents.

In order to access documents, applications will typically provide a search functionality that allow a user to submit a search and, in response, provides relevant search results. The present disclosure is directed to document searching, and in particular the manner in which document searches are conducted and search results are presented to a user.

In the context of the present disclosure, and unless explicitly stated otherwise, reference to a document is a general reference to any type of digital content that is intended to be viewed or read by human users. By way of example, a document design application may allow users to create documents of different types such as: word processing documents; presentations (such as slideshows or the like); posters; social media posts; videos; images; webpages; and/or other types of documents.

In the present disclosure, a document may have one or more pages. A page defines an area of content. Different document types may have pages with different properties. By way of example, a social media post document may (by default) have one or more pages that are 1080x1080 pixels in size. Alternatively, an A4 document may have one or more pages that are 21cm x 29.7cm in size.

The present disclosure will be described in the context of what will be referred to as independent page documents. An independent page document is a document which includes one or more independent pages: that is, content placed on one page will not (absent explicit user interaction) end up on another page of the document. One example of an independent page document is a presentation type document - e.g. a slideshow or the like - in which pages correspond to presentation slides and content placed on one page will not automatically move to another page. This may be contrasted with what will be referred to as continuous page documents in which content placed on one page may end up on another page. One example of a continuous page document is a typical word processing document in which new pages are automatically created as text is entered, and text initially entered on one page may automatically be moved to another page during editing or other document operations.

Although the present disclosure is described in the context of independent page documents the techniques described here may be applied (or be adapted to be applied) to continuous page documents.

As will be appreciated, various data formats for storing documents are possible. One example of a document format that is provided for illustrative purposes will now be described. Alternative document data formats are, however, possible, and the processing described herein can be adapted for alternative document formats.

In the present context, data in respect of a document is stored in a document record. Generally speaking, a document record defines certain document-level attributes and includes page data. The page data includes (or references) one or more page records, each of which defines a page of the document. Each page record may define one or more page-level attributes as well as element data for the page. The element data for a given page defines (or references) one or more element records which define document elements that have been added to the page.

In the present example, the format of each document record is a device independent format that includes a set of key-value pairs (e.g. a map or dictionary). To assist with understanding, a partial example of a document record format is as follows:

| **Key/field** | **Note** | **E.g.** |
|---|---|---|
| Document ID | A unique identifier of the document. | "docId": "abc123", |
| Dimensions | Dimensions (e.g. width and height) of the pages of the document. | "dimensions": { "width": 1080, "height": 1080 }, |
| Pages | An array of page records (described further below). | "pages": [ {"elements": [{...}, {...},..., {...}]}, {"elements": [{...}, {...},..., {...}]}, ..., {"elements": [{...}, {...},..., {...}]} ], |
| Document type | An indicator of the type of the document, which may be used for searching and/or sorting purposes. This may be an enumerated or other data type. | "type": ["document"], |
| Document name | A string indicating the document name (default or user specified) | "name": "Test Doc 3", |
| Document owner | An indicator (e.g. a user ID) of the document owner or creator. | "owner": 12ab34cd, |
| Creation date | A timestamp of the time/date the document was created. | "creation": "xxx" |

In this example, the document-level attributes include: a document identifier; default page dimensions; a document type; a document name; a document owner; and a creation date. Additional and/or alternative document-level attributes may be provided, such as attributes regarding creation date, document version, document permissions, and/or other document - level attributes.

A document record's page data is a set (in this example an array) of page records, each of which defines page data in respect of a page of the document. In this example, a page record's position in a document's page array serves to identify the page and also determines its position in the document (e.g. a page at array index n appears after a page at array index n-1 and before a page at array index n+1). Page order may be alternatively handled, however, for example, by storing page order as an explicit attribute.

In this example, each page record includes element data in the form of an element set (in this example an array). While not shown, a page record may also include additional page-level data, for example page dimensions (which, if present, override the document-level dimensions).

Each element in a page's element array is an element record defining either a single element that has been added to the page in question or a group of elements that have been added to the page in question and grouped together.

In this example, an element record's position in an element array serves to identify that element and determines its depth on the page (e.g. an element at array index n is positioned above an element at array index n-1 and below an element at array index *n*+1)*.* Element depth may be alternatively handled, however, for example, by storing depth as an explicit element attribute.

Generally speaking, an element is an object that has been added to a page - e.g. by copying and pasting, importing from one or more element libraries (e.g. libraries of images, animations, videos, shapes, etc.), drawing/creating using one or more element creation tools (e.g. a text tool, a line tool, a rectangle tool, an ellipse tool, a curve tool, a freehand tool, and/or other design tools), or otherwise being added to a document page.

The types of document elements available will depend on the system/application in question. By way of example, however, document element types such as the following may be provided: image elements (e.g. raster and/or vector graphic elements); video elements; audio elements; text elements; frame elements (e.g. vector graphic elements configured to receive other elements - such as graphics or videos); effects (e.g. an effect that applies to a page, such as a shower of confetti or other effect); and/or elements of other types.

The particular data (or attributes) associated with a document element that has been added to a page will depend on the type of element. For example, video type elements and audio type elements may include attributes such as start/end trim times which are not relevant to image-type elements.

By way of example, an element record for a text type element may be as follows:

| **Key/field** | **Note** | **E.g.** |
|---|---|---|
| Type | A value defining the type of the element (in this case a text element). | "type": "TEXT", |
| Position | Data defining the position of the element (or element group) on the page: e.g. an (x, y) coordinate pair defining (for example) the top left point of the element (or element group). | "position": (100, 100), |
| Size | Data defining the size of the element: e.g. a (width, height) pair. | "size": (500, 400), |
| Rotation | Data defining any rotation of the element. | "rotation": 0, |
| Opacity | Data defining any opacity of the element. | "opacity": 1, |
| Text | Data defining the actual text characters | "text": "Trip", |
| Attributes | Data defining attributes of the text (e.g. font, font size, font style, font colour, character spacing, line spacing, paragraph spacing, justification, and/or any other relevant attributes) | "attributes": {...} |

As a further example, an element record for an image type element may be as follows:

| **Key/field** | **Note** | **E.g.** |
|---|---|---|
| Type | A value defining the type of the element (in this case image). | "type": "IMAGE", |
| Position | Data defining the position of the element. | "position": (100, 100), |
| Size | Data defining the size of the element. | "size": (500, 400), |
| Rotation | Data defining any rotation of the element. | "rotation": 0, |
| Opacity | Data defining any opacity of the element. | "opacity": 1, |
| Media identifier | Data defining a link or pointer to a location where the original element data - e.g. the original raster or vector image data in this example - is located. | "mediaReference": "abc123", |

The storage location for document data (e.g. document records) will depend on implementation. For example, in a stand-alone implementation an application will typically store document records on and retrieve document records from memory that is locally accessible to the computer processing system that the application runs on. Alternatively, if an application is a client application that operates in conjunction with a server application, document records will typically be stored on/retrieved from data storage that is accessible to the server application.

The techniques described herein are computer implemented techniques. Generally speaking, the techniques are performed by one or more computer applications running on one or more computer processing systems.

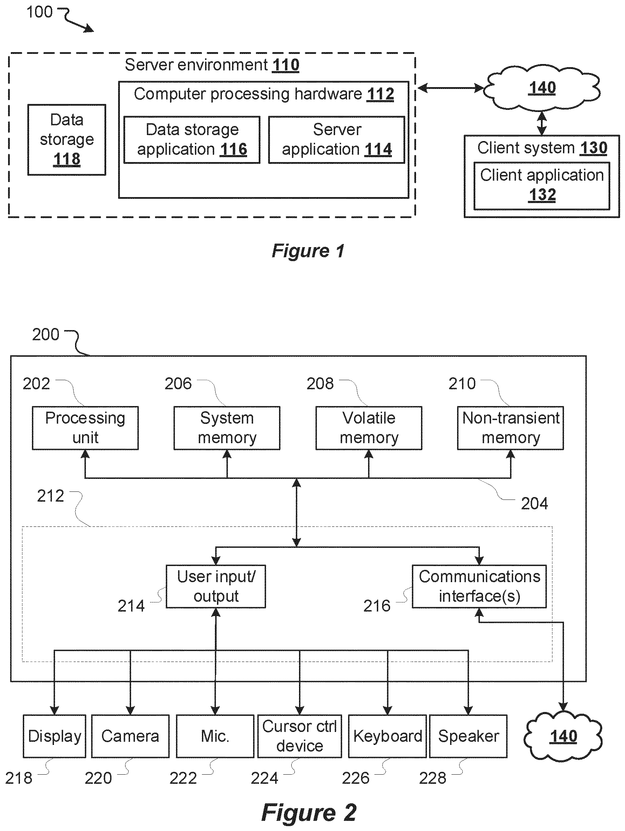

In the detailed embodiment described below, the techniques are performed in a client-server architecture in which various applications operate together to provide a document platform. FIG. 1 is a diagram depicting a networked environment 100 in which various features of the present disclosure may be implemented.

Networked environment 100 includes a server environment 110 and a client system 130 which communicate via one or more communications networks 140 (e.g. the Internet).

Generally speaking, the server environment 110 includes computer processing hardware 112 (discussed below) on which applications that provide server-side functionality to client applications such as client application 132 (described below) execute. In the present example, server environment 110 includes a server application 114 and a data storage application 116.

The server environment 110 may include one or more web server and/or application server applications allowing it to interact with both web and native client applications.

In the present example the server environment 110 facilitates functions related to documents - for example document storage, searching, retrieval, and viewing. Server environment 110 may facilitate additional document-related functions, such as document creation, editing, publishing, sharing, and/or other document-related functions. The server environment 110 may also facilitate additional functions that are typically of server systems - for example user account creation and management, user authentication, and/or other server side functions. While some functions may be performed solely by the server environment 110, many functions will be performed in conjunction with a client application 132.

The data storage application 116 executes to receive and process requests to persistently store and retrieve data relevant to the operations performed/services provided by the server environment 110. Such requests may be received from the server application 114, other server environment applications, and/or (in some instances) directly from client applications such as 132. Data relevant to the operations performed/services provided by the server environment 110 may include, for example, user account data, user document data (i.e. data describing documents that have been created by users), document template data (e.g. templates that can be used by users to create documents), document element data (e.g. data in respect of stock elements that users may add to documents), and/or other data relevant to the operation of the server environment 110.

The data storage application 116 may, for example, be a relational database management application or an alternative application for storing and retrieving data from data storage 118. Data storage 118 may be any appropriate data storage device (or set of devices), for example one or more non transient computer readable storage devices such as hard disks, solid state drives, tape drives, or alternative computer readable storage devices.

In server environment 110, server application 114 persistently stores data to data storage device 118 via the data storage application 116. In alternative implementations, however, the server application 114 may be configured to directly interact with data storage devices such as 118 to store and retrieve data (in which case a separate data storage application may not be needed). Furthermore, while a single data storage application 116 is described, server environment 110 may include multiple data storage applications. For example one data storage application 116 may be used for user account data, another for user document data, another for document element data and so forth. In this case, each data storage application may interface with one or more shared data storage devices and/or one or more dedicated data storage devices, and each data storage application may receive/respond to requests from various server-side and/or client-side applications (including, for example server application 114).

As noted, the server application 114 and data storage application 116 run on (or are executed by) computer processing hardware 112. Computer processing hardware 112 includes one or more computer processing systems. The precise number and nature of those systems will depend on the architecture of the server environment 110.

For example, in one implementation a single server application 114 runs on its own computer processing system and a single data storage application 116 runs on a separate computer processing system. In another implementation, a single server application 114 and a single data storage application 116 run on a common computer processing system. In yet another implementation, server environment 110 may include multiple server applications running in parallel (on one or multiple computer processing systems).

In a further implementation, server environment 110 is a scalable environment in which application instances (and the computer processing hardware 112 - i.e. the specific computer processing systems required to run those instances) are commissioned and decommissioned according to demand - e.g. in a public or private cloud-type system. In this case, server environment 110 may simultaneously run multiple server applications 114 and/or multiple data storage applications 116 (on one or multiple computer processing systems) as required by client demand. Where server environment 110 is a scalable system it will include additional applications to those illustrated and described. As one example, the server environment 110 may include a load balancing application which operates to determine demand, direct client traffic to the appropriate server application instance 114 (where multiple server applications 114 have been commissioned), trigger the commissioning of additional server environment applications (and/or computer processing systems to run those applications) if required to meet the current demand, and/or trigger the decommissioning of server environment applications (and computer processing systems) if they are not functioning correctly and/or are not required for current demand.

Communication between the applications and computer processing systems of the server environment 110 may be by any appropriate means, for example direct communication or networked communication over one or more local area networks, wide area networks, and/or public networks (with a secure logical overlay, such as a VPN, if required).

The present disclosure describes various operations that are performed by applications of the server environment 110. Generally speaking, however, operations described as being performed by a particular application (e.g. server application 114) could be performed by one or more alternative applications, and/or operations described as being performed by multiple separate applications could in some instances be performed by a single application.

Client system 130 hosts a client application 132 which, when executed by the client system 130, configures the client system 132 to provide client-side functionality/interact with server environment 110 (or, more specifically, the server application 114 and/or other applications provided by the server environment 110). Via the client application 132, and as discussed in detail below, a user can search for and view documents. Client application 132 may also provide a user with access to additional document related operations, such as creating, editing, saving, publishing, sharing, and/or other document related operations. Some operations may be performed solely by client application 132, while others may involve the client application 132 communicating with the server environment 110 for processing to be performed there (e.g. by the server application 114).

The client application 132 may be a general web browser application which accesses the server application 114 via an appropriate uniform resource locator (URL) and communicates with the server application 114 via general world-wide-web protocols (e.g. http, https, ftp). Alternatively, the client application 132 may be a native application programmed to communicate with server application 114 using defined application programming interface (API) calls and responses.

A given client system such as 130 may have more than one client application 132 installed and executing thereon. For example, a client system 130 may have a (or multiple) general web browser application(s) and a native client application.

While the embodiments described below make use of a client-server architecture, the techniques and processing described herein could be adapted to be executed in a stand-alone context - e.g. by an application (or set of applications) that run on a computer processing system and can perform all required functionality without need of a server environment or application.

As noted, the techniques and operations described herein are performed by one or more computer processing systems.

By way of example, client system 130 may be any computer processing system which is configured (or configurable) by hardware and/or software - e.g. client application 132 - to offer client-side functionality. A client system 130 may be a desktop computer, laptop computer, tablet computing device, mobile/smart phone, or other appropriate computer processing system.

Similarly, the applications of server environment 110 are executed by one or more computer processing systems. Server environment computer processing systems will typically be server systems, though again may be any appropriate computer processing systems.

FIG. 2 provides a block diagram of a computer processing system 200 configurable to implement embodiments and/or features described herein. System 200 is a general purpose computer processing system. It will be appreciated that FIG. 2 does not illustrate all functional or physical components of a computer processing system. For example, no power supply or power supply interface has been depicted, however system 200 will either carry a power supply or be configured for connection to a power supply (or both). It will also be appreciated that the particular type of computer processing system will determine the appropriate hardware and architecture, and alternative computer processing systems suitable for implementing features of the present disclosure may have additional, alternative, or fewer components than those depicted.

Computer processing system 200 includes at least one processing unit 202. The processing unit 202 may be a single computer processing device (e.g. a central processing unit, graphics processing unit, or other computational device), or may include a plurality of computer processing devices. In some instances, where a computer processing system 200 is described as performing an operation or function all processing required to perform that operation or function will be performed by processing unit 202. In other instances, processing required to perform that operation or function may also be performed by remote processing devices accessible to and useable (either in a shared or dedicated manner) by system 200.

Through a communications bus 204 the processing unit 202 is in data communication with a one or more machine readable storage (memory) devices which store computer readable instructions and/or data which are executed by the processing unit 202 to control operation of the processing system 200. In this example system 200 includes a system memory 206 (e.g. a BIOS), volatile memory 208 (e.g. random access memory such as one or more DRAM modules), and non-transient memory 210 (e.g. one or more hard disk or solid state drives).

System 200 also includes one or more interfaces, indicated generally by 212, via which system 200 interfaces with various devices and/or networks. Generally speaking, other devices may be integral with system 200, or may be separate. Where a device is separate from system 200, connection between the device and system 200 may be via wired or wireless hardware and communication protocols, and may be a direct or an indirect (e.g. networked) connection.

Generally speaking, and depending on the particular system in question, devices to which system 200 connects - whether by wired or wireless means - include one or more input devices to allow data to be input into/received by system 200 and one or more output device to allow data to be output by system 200. Example devices are described below, however it will be appreciated that not all computer processing systems will include all mentioned devices, and that additional and alternative devices to those mentioned may well be used.

For example, system 200 may include or connect to one or more input devices by which information/data is input into (received by) system 200. Such input devices may include keyboard, mouse, trackpad, microphone, accelerometer, proximity sensor, GPS, and/or other input devices. System 200 may also include or connect to one or more output devices controlled by system 200 to output information. Such output devices may include devices such as a display (e.g. a LCD, LED, touch screen, or other display device), speaker, vibration module, LEDs/other lights, and/or other output devices. System 200 may also include or connect to devices which may act as both input and output devices, for example memory devices (hard drives, solid state drives, disk drives, and/or other memory devices) which system 200 can read data from and/or write data to, and touch screen displays which can both display (output) data and receive touch signals (input).

By way of example, where system 200 is a client system such as 130 it may include a display 218 (which may be a touch screen display), a camera device 220, a microphone device 222 (which may be integrated with the camera device), a cursor control device 224 (e.g. a mouse, trackpad, or other cursor control device), a keyboard 226, and a speaker device 228.

System 200 also includes one or more communications interfaces 216 for communication with a network, such as network 140 of environment 100 (and/or a local network within the server environment 110). Via the communications interface(s) 216, system 200 can communicate data to and receive data from networked systems and/or devices.

System 200 may be any suitable computer processing system, for example, a server computer system, a desktop computer, a laptop computer, a netbook computer, a tablet computing device, a mobile/smart phone, a personal digital assistant, or an alternative computer processing system.

System 200 stores or has access to computer applications (also referred to as software or programs) - i.e. computer readable instructions and data which, when executed by the processing unit 202, configure system 200 to receive, process, and output data. Instructions and data can be stored on non-transient machine readable medium such as 210 accessible to system 200. Instructions and data may be transmitted to/received by system 200 via a data signal in a transmission channel enabled (for example) by a wired or wireless network connection over an interface such as communications interface 216.

Typically, one application accessible to system 200 will be an operating system application. In addition, system 200 will store or have access to applications which, when executed by the processing unit 202, configure system 200 to perform various computer-implemented processing operations described herein. For example, and referring to the networked environment of FIG. 1 above, server environment 110 includes one or more systems 200 which run a server application 114 and a data storage application 116. Similarly, client system 130 runs a client application 132.

In some cases part or all of a given computer-implemented method will be performed by system 200 itself, while in other cases processing may be performed by other devices in data communication with system 200.

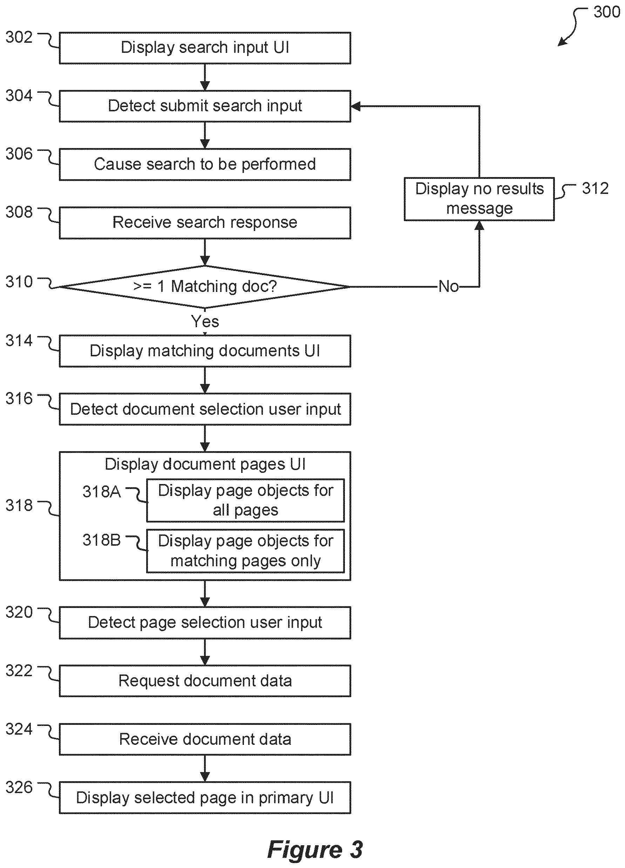

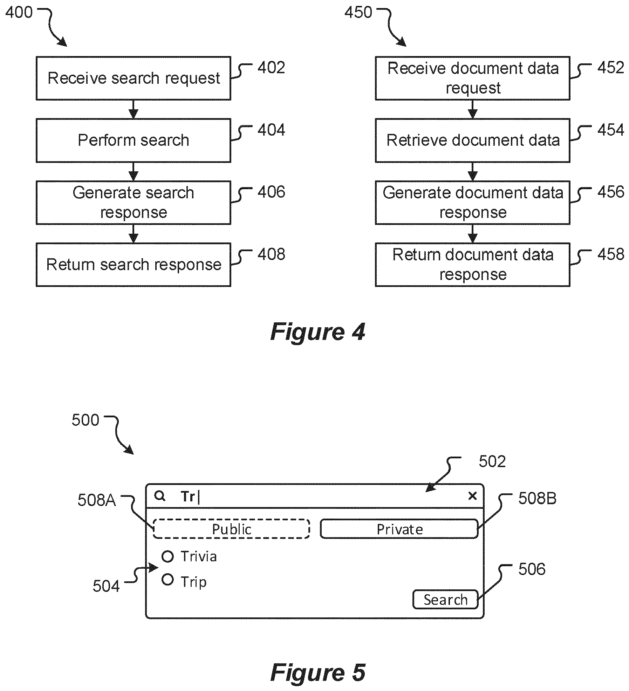

A document searching method in accordance with an embodiment will now be described with reference to FIG. 3 (which generally depicts client side operations 300) and FIG. 4 (which generally depicts server side operations 400 and 450). The example document searching method will also be described with reference to FIGs 5 to 11 which depict example user interfaces (UIs) which may be presented to a user (e.g. on a display 218 of client system 130) to facilitate document searching and viewing search results.

Turning initially to FIG. 3, a flowchart depicting client side operations 300 is provided. In this example, the client side operations are performed by a client application 132 running on client system 130.

Where client application 132 operates to display controls, interfaces, or other user interface objects, client application 132 does so via one or more displays that are connected to (or integral with) system 130 - e.g. display 218. Where client application 132 operates to receive or detect user input, such input is provided via one or more input devices that are connected to (or integral with) system 130 - e.g. a touch screen, a touch screen display 218, a cursor control device 224, a keyboard 226, and/or an alternative input device. Where client application 132 operates to communicate data to or receive data from server application 114, it does so via a communications interface such as 216.

At 302, client application 132 displays a search input UI. The search input UI receives input - e.g. text input entered by a user via a keyboard 226 (which may physical or virtual) or an alternative input device) - that defines a search string.

In certain embodiments, client application 132 may display suggested search strings that a user can select in the search input UI. Suggested search strings may, for example, be based on prior searches that the user (or other users) have performed, and may be based on any input that has already been received via the search input control. Suggested search strings may be populated by client application 132 itself, or may be provided by server application 114 (e.g. in response to client application 132 communicating characters that have been input by a user to the server application 114).

FIG. 5 provides one example of a search input UI 500. In this example, the search input UI 500 includes: a search entry field 502 into which a user can enter a search string (here the letters "Tr" have been entered as an example); a suggested search strings area 504 (which, in this example, client application 132 has populated with the terms "Trivia" and "Trip"); and a submit control 506 (which, when activated by a user, submits the search).

Example UI 500 also includes two example search criteria controls - in this example a "public" control 508A and a "private" control 508B. Search criteria controls such as these may be provided to allow a user to specify additional search criteria.

By way of example, in the context of a document design application as described above, "public" documents may be documents such as templates which are accessible to all users of the application. "Private" documents, on the other hand, may be non-public documents that the user performing the search has permission to access - for example documents that the user themselves have created, documents that have been created by other users who are part of a team that the user performing the search has created, and/or other document that the user has been given permission to access. In the example of FIG. 5, the private control 508B is emphasised (indicated here by solid line) and the public control 508A is de-emphasised (indicated here by broken line), indicating that the public control has been selected and a search will be performed on public documents. If user input selecting the "public" control 508A was received, client application 132 would emphasise the public control 508A and de-emphasise the private control 508B and a search would be performed on private documents.

Additional and/or alternative search criteria controls 508 may be provided to allow a user to specify various search criteria. By way of example, search criteria controls may be provided for a user to set search criteria such as: document type; document creation date; last edit date; document creator; and/or other search criteria.

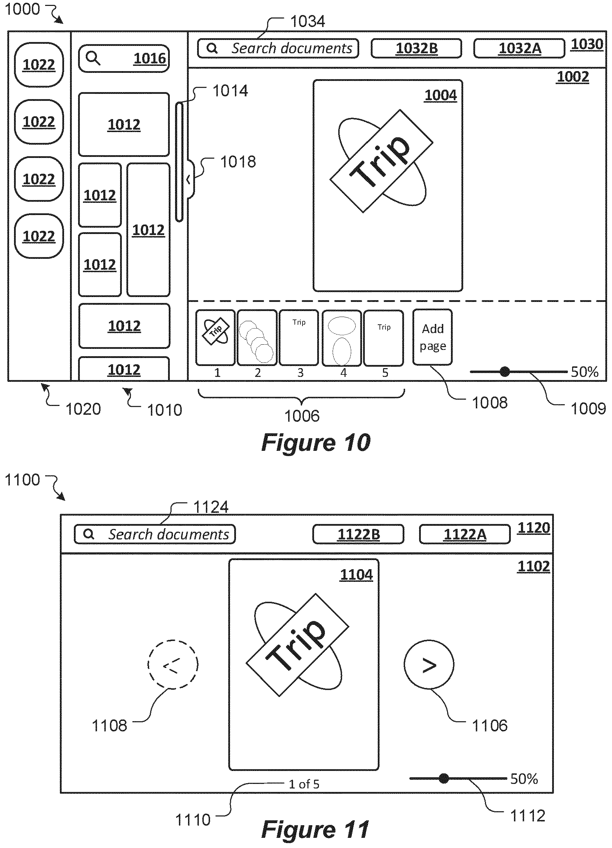

Client application 132 may be configured to display search input UI 500 as a pop-up interface atop an underlying/primary user interface or as a stand-alone UI. Moreover, alternative search UIs are possible. For example, client application 132 may be configured to display a search interface that consists solely of search entry field such as 502. Examples of this are depicted in FIG 10 (document search control 1034) and FIG. 11 (document search control 1124).

At 304, client application 132 detects a submit search input. Client application 132 may be configured to allow for various submit search inputs. For example, detecting use of an `enter' key of a physical or virtual keyboard, or an alternative defined control, may be a submit search input. In addition, or alternatively, user activation of a submit control 506 may be a submit search input. In addition, or alternatively, where suggested search strings 504 are displayed, user input selecting a particular suggested search string (e.g. via a cursor device, touch screen, or other interaction) may be a submit search input.

At 306, in response to detecting the submit search input, client application 132 causes a search to be performed. In the present example, client application 132 causes the search to be performed by generating a search request and communicating this to server application 114.

The search that client application 132 causes to be performed at 306 is associated with a search string. In many instances, the search string will be the input that has been received in a search entry field 502. Where suggested search strings 504 are displayed and the submit search input is user input selecting one of these suggested strings, the search string may be based on the selected string. E.g. if a suggested search string of "Trip" is displayed, then a submit search input that is selection of that suggested search string is the string "Trip" (regardless of what characters have been entered in the search entry field 502). Client application 132 includes the search string (or data associated therewith) in the search request that is generated and communicated to the server application 114.

The search that client application 132 causes to be performed at 306 may also be associated with one or more search criteria that define parameters for the search. Such criteria may define, for example, one or more of: whether the search is to be performed on public or private documents (as discussed above); what document type(s) is/are to be searched; a document creation date time or time window; a document last edited time or time window; a document creator; and/or other search criteria. Client application 132 may be configured with certain default search options, and/or options may be set by the user submitting the search (e.g. via one or more search criteria controls 508). Where used, client application 132 may include any search criteria in the search request that is generated and communicated to the server application 114.

The search that client application 132 causes to be performed at 306 may also (or alternatively) be associated with additional search information. For example, the search may be associated with user account information - e.g. a user identifier or other information that allows details of a user account that is been used to perform the search to be determined. In this case client application 132 may be configured to include user account information in the search request that is generated and communicated to the server application 114. Alternatively, user account information may be associated with the search in alternative ways. For example, server application 114 may identify user account information based on a user account that has been used to log into or otherwise access client application 132 (and server application 114) prior to performing the search.

Turning to FIG. 4, flowchart 400 depicts server side operations performed (in this example, by server application 114) on receiving a search request.

At 402 the server application 114 receives the search request from the client application 132.

At 404, server application 114 performs a search based on the search request. Generally speaking, this may involve server application 114 interrogating the relevant data storage 118 on which documents are stored (either directly or via a data storage application 116).

Generally speaking, the search is performed on a set of documents so as to identify documents and/or pages that match the requirements defined by (or otherwise associated with) the search request (e.g. by the search string, any search criteria, and/or any other search information).

In the present context, a matching document is a document that matches the requirements of the search request. A document will match the requirements of the search request if it is within in the search scope (e.g. due to user permissions and/or any other search options) and has one or more matching pages (see below). In the present embodiments, a document will also match the requirements of the search request if it is within in the search scope and has relevant metadata that matches the search string (e.g. a document name includes text that matches the search string).

In the present context, a matching page is a document page that matches the requirements of the search request. A page will match the requirements of the search request if that page belongs to a document that is within the search scope and includes one or more elements with text that matches the search string.

Server application 114 may be configured to perform the search in various ways. By way of example, such a search may be conducted using a search engine such as Elasticsearch, Solr, or an alternative search engine.

At 406, on completion of the search, server application 114 generates a search response.

If no matching documents or document pages were identified, the search response may be empty or include data indicating that no matching documents (or pages) were identified.

If one or more matching documents or document pages were identified, the search response generally provides data in respect of the matching documents and/or matching pages.

In the present embodiments, where one or more matching documents are identified, the search response includes a set of search results, each search result corresponding to a matching document.

The search result in respect of a particular matching document may include document metadata in respect of the particular document. The document metadata may include data such as an identifier of the document (e.g. a document ID), a document title, a document type, a number of pages in the document, a number of matching pages in the document (if any), and/or other document metadata.

The search result in respect of a particular matching document may include document preview data. The document preview data may, for example, be a preview or thumbnail of a particular page of the document (e.g. the first page of the document), or data that can be used by client application 132 to retrieve such a preview or thumbnail.

The search result in respect of a particular matching document may include document relevance data. The document relevance data may, for example, include or be based on one or more of: the number of matching pages the document has (if any); the number of times the search string appears in document page(s) and/or document metadata; and/or other data.

The search result in respect of a particular matching document may include page data in respect of the page(s) of the particular document. In the present embodiments, page data is provided for all of a matching document's pages (whether a page is a matching page or not). In other embodiments, however, page data is only provided for pages of the document that are matching pages (if any).

The page data for a particular page may include page metadata such as an identifier of the document that the page is part of (e.g. a document ID), an identifier of the page itself (e.g. a page number or other identifier), and/or other metadata.

The page data for a particular page may also include page preview data. The page preview data may, for example, be a preview or thumbnail of the particular page, or data that can be used by client application 132 to retrieve such a preview or thumbnail.

The page data for a particular page may also include page relevance data. The page relevance data may include or be based on the number of times (if any) the search string appears in the particular page and/or other data.

As will be appreciated, for a given search result there may be overlap between document data and page data. For example, if page one of a document matches the search criteria then the page preview data for that page may be the same as the document preview data (and in this case the search response may be structured so the preview data is not duplicated).

Sever application 114 may be configured to generate the search response in any appropriate format. By way of example, the search response may take a format such as the following:

| |
|---|
| ```
   {
           "results" :
                     {
``` |
| ```
                            "id": string,
                            "pages": [int]
            }
   }
``` |

In this example, each results object identifies a particular document and the zero or more matching pages of that document. The document identifier and page(s) (if any) can be used to retrieve further document and page data.

Furthermore, server application 114 maybe configured to paginate or otherwise split the search results rather than sending all search results to the client application 132 at the same time/without receiving client requests for additional search results.

At 408, server application 114 communicates the search response to the client application 132.

Returning to FIG. 3, at 308 client application 132 receives a search response from the server application 114.

At 310, client application 132 determines the number of matching documents that were identified.

If the search response does not identify any matching documents, processing proceeds to 312. In the present example, client application 132 displays an appropriate message (e.g. a "no matching results" message) at 312 and processing then returns to 304 (where the initial query may be refined and resubmitted).

If the search response identifies one or more matching documents processing proceeds to 314. In this case, client application 132 displays a matching documents UI.

Generally speaking, the matching documents UI includes one or more document objects, each document object corresponding to a matching document identified by the search. In the example search response described above, therefore, each document object corresponds to a search result included in the search response.

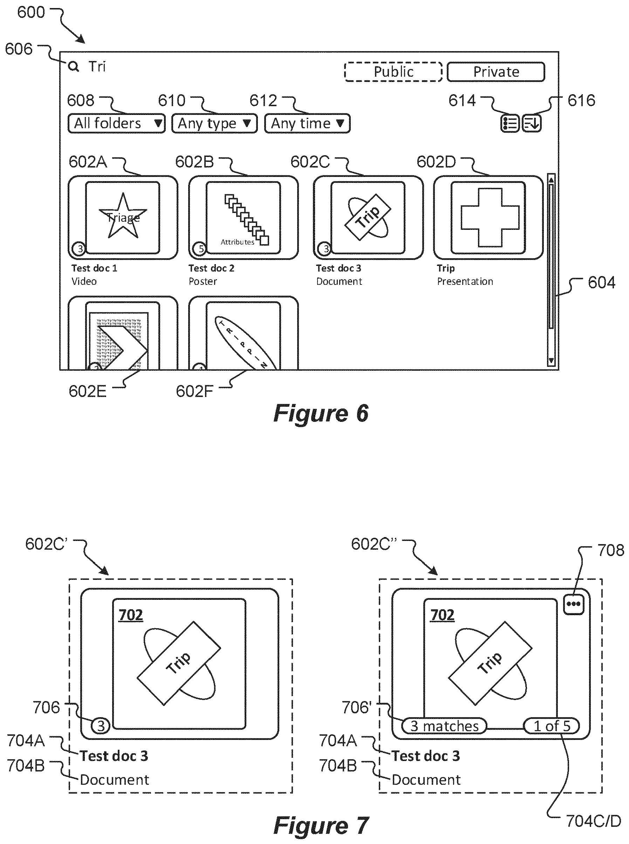

FIG. 6 provides one example of a matching documents UI 600. In this example, the matching documents UI 600 includes six document objects 602 (602A-F), four of which are fully displayed and two of which are partially displayed. Document objects 602 are described further below with reference to FIG. 7.

In some cases, the number of search results (and, therefore, document objects 602) may exceed the area that can be displayed in a single screen. In this case client application 132 may provide a scroll bar 604 and/or other navigation mechanism allowing a user to scroll/page/or otherwise navigate through the document objects.

Client application 132 may be further configured to display one or more additional controls or UI elements in the matching documents UI 600. By way of example, client application 132 may display one or more of: a search string element 606 which displays the search string submitted by the user (here "Tri") and may allow editing/resubmission of a new search string; a folder control 608 which allows a user to filter the search results based on the folder(s) into which documents are organised; a document type control 610 which allows a user to filter the search results based on document type; a date modified control 612 which allows a user to filter the search results based on when a document was last modified; a view switcher control 614 which allows a user to change the search results view - e.g. from a grid view (as depicted in FIG. 6) to a list view; a sort by control 616 which allows a user to change how the search results (and, therefore, search objects) are ordered - e.g. based on relevance, date modified, or other criteria; and or other UI controls or elements..

With respect to document objects 602, FIG. 7 provides two examples of a document object 602 (in particular, document object 602C). In the present embodiments, client application 132 is configured to alter the display of a document object in response to detecting a secondary user interaction with that object. A secondary user interaction may, for example, be hover interaction or other interaction that is not a primary interaction (which, as discussed below, causes selection of a document object). Within this context, 602C' depicts document object 602C without a secondary user interaction detected, and 602C" depicts document object 602C with a secondary user interaction detected.

In the present embodiments, each document object 602 includes a preview 702 of the matching document the object corresponds to. The preview may, for example, be a preview or thumbnail of particular page of the document, and may be displayed based on the document preview data received in the search response. The particular page of the document used for the preview may be the first page of the document. Alternatively, if the document has one or more matching pages the particular page of the document used for the preview may be the first matching page of the document. Further alternatively, if the document has multiple matching pages, the particular page of the document used for the preview may be determined based on the page relevance data of the matching pages (e.g. the page with a highest relevance score).

In the present embodiments, client application 132 is configured to display various document metadata 704 with (or as part of) each document object 602. This may be based on the document metadata included in the search response. In the present example, the document metadata includes: a document title 704A; a document type 704B; a current page indicator 704C that indicates the specific page of the document that the document preview relates to; a total pages indicator 704D that indicates the total number of pages in the document.

In the present embodiments, client application 132 is configured display certain metadata items in response to a secondary user interaction with a document object 602. For example, and as depicted in FIG. 7, client application 132 may display current and total page indicators 704C/D (in this case as a combined *"m* of *n"* type indicator, indicating that the document preview corresponds to page *m* of the document and the document has *n* pages in total) in response to a secondary user interaction.

In alternative embodiments, client application 132 need not display document metadata, or may display additional/alternative metadata items.

In the present embodiments, for each document object 602 that corresponds to a document with one more matching pages, client application 132 displays a matching pages indicator 706. The matching pages indicator may generally indicate that the corresponding document has one or more pages that match the search string. The matching page indicator may additionally indicate the number of pages in the corresponding document that match the search string. For example, in FIGs 6 and 7 document object 602C has a matching page indicator 706 that indicates the corresponding document has 3 pages that match the search string. Furthermore, and as depicted in FIG. 7, in response to a secondary user interaction with a document object client application 132 updates the matching page indicator (here from 706 to 706') to provide additional information (here changing '3' to `3 pages').

If a document does not have any matching pages no matching page indicator is displayed for its document object. An example of this is document object 602D in FIG. 6. In this particular example, the document is a matching document due to its title "Trip", however no pages of the document are matching.

The matching page indicator provides users with useful and additional information regarding the search results. By way of example, in FIG. 6 a user can immediately tell that the document corresponding to document object 602D does not include any matching pages, while the document corresponding to document object 602C includes three matching pages. This may assist the user in finding a particular document they are looking for. For example, the user may know that the document they are searching for included the search string in one or more pages, and in this case the user does not need to look further at the document corresponding to document object 602D. This, in turn, may prevent document data regarding that document from having to be retrieved from its source (e.g. server environment 110), processed, and displayed.

Client application 132 may be configured to display additional and/or alternative UI elements for document objects 602. For example, client application may display a document object menu control 708 which, if selected by a user, causes a menu with various options to open (e.g. options that allow a user to make a copy of the document, move the document to a different folder/storage location, download the document to a designated location, share the document, obtain a link (e.g. URL) to the document, delete the document, and/or perform other options). In the present example the menu control 708 is displayed in response to a secondary interaction with a document object (as shown in object 602C" of FIG. 7). In alternative embodiments, however, client application 132 may always display a menu control such as 708 (or may not display any menu control).

Client application 132 may be configured to display matching documents UI 600 as a pop-up interface atop an underlying/primary user interface or as a stand-alone UI. Moreover, alternative matching document UIs are possible.

At 316, client application 132 detects user input selecting a particular document object 602 that is displayed in the matching documents UI 600. This may be referred to as a document selection user input, and may also be referred to as a primary interaction with a document object 602. The document selection input may, for example, be a click (or other interaction) on or proximate a particular document object 602 using a cursor control device 224; a tap (or other interaction) on or proximate a particular document object 602 on a touch screen display 218; or an alternative user input with respect to a particular document object 602. The selected document object 602 will correspond to a particular search result (referred to as the selected search result) which will, in turn, correspond to a particular matching document (referred to as the selected document).

At 318, in response to detecting the user input selecting a document object, client application 132 displays a document pages UI. Generally speaking, the document pages UI includes one or more page objects, each page object corresponding to a page of the selected document.

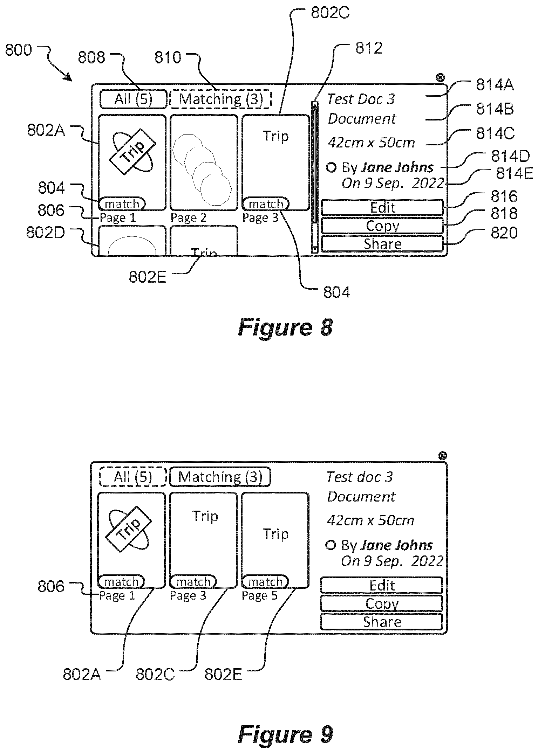

FIG. 8 provides an example document pages UI 800. In this particular example, the selected document corresponds to document object 602C of FIG. 6 and includes five pages, three of which are matching pages. Example UI 800 includes five page objects 802 (802A-E), three of which are fully displayed and two of which are partially displayed.

In the present embodiment, each page object 802 includes a preview of the page the object corresponds to. The preview may, for example, be a preview or thumbnail of the page, and may be displayed based on the page preview data.

In the present embodiment, for each page object 802 that corresponds to a matching page, client application 132 is configured to display a page match indicator 804. The page match indicator 804 may generally indicate that the corresponding page includes one or more elements that match the search string (e.g. in the present example by the text "match"). The page match indicator may additionally indicate the number of elements of the corresponding page that match the search string.

In addition, client application 132 may be configured to display various page metadata for each page object (based on the page metadata included in the search result). This may include, for example, a page number indicator 806 and/or other metadata.

Client application 132 may be further configured to display an all pages control 808 and a matching pages control 810 in the document pages UI 800. In the present example, the all pages control 808 includes an indicator of the total number of pages in the selected document and the matching pages control 810 includes an indicator of the number of matching pages in the selected document.

In response to user input selecting the all pages control, client application 132 displays page objects 802 for all pages of the selected document (at 318A). This is depicted in FIG. 8 in which the all pages control 808 is emphasised (indicated here by solid line) and the matching pages control 810 is de-emphasised (indicated here by broken line). Accordingly, page objects 802 for all five pages of the document are displayed.

In response to user input selecting the matching pages control 810, client application 132 only displays page objects 802 for matching pages of the selected document (if any) (at 318B). This is depicted in FIG. 9 in which the matching pages control 810 is emphasised (indicated here by solid line) and the all pages control 808 is de-emphasised (indicated here by broken line). Accordingly, only page objects 802A, 802C, and 802E that correspond to the three matching pages of the selected document (pages 1, 3, and 5) are displayed.

Client application 132 may be configured to display either all pages as a default view or to display only matching pages as a default view. Client application 132 may be configured to provide a single all/matching page toggle control, e.g. so that if the current view is of all pages activation of the toggle causes matching pages to be displayed, and if the current view is of matching pages activation of the toggle causes all pages to be displayed.

In some cases, the number of document pages (and, therefore, page objects) that are to be displayed may exceed the available display area. In this case client application 132 may provide a scroll bar 812 and/or an alternative navigation mechanism allowing a user to scroll/page/or otherwise navigate through the page objects.

Client application 132 may be configured to display document metadata 814 in the document pages GUI. The document metadata provides information in respect of the selected document and may include, for example, one or more of: a document name 814A; a document type 814B; document dimensions 814C; a document creator 814D; a creation date 814E; the total number of document pages; and/or other document metadata.

Client application 132 may be configured to display one or more additional controls in the document pages GUI. For example, client application 132 may be configured to display one or more of: an edit control 816 which, if activated, causes client application 132 to open the selected document in an editor interface at a particular page - e.g. page 1; a copy control 818 which, if activated, causes client application 132 to create a copy of the selected document and open the copy in an editor interface; a share control 820 which, if activated, causes client application 132 to provide options for the user to share the selected document (e.g. by copying a link such as a URL to the document to a clipboard and/or setting access permissions for the selected document); a view switcher control which allows a user to change the search results view - e.g. from a grid view (as depicted in FIG. 8) to a list view; a sort by control which allows a user to change how the search results (and, therefore, search objects) are ordered - e.g. based on relevance, date modified, or other criteria; and/or other additional controls.

Client application 132 may be configured to display document pages UI 800 as a pop-up interface atop an underlying/primary user interface or as a stand-alone UI. Moreover, alternative document pages UIs are possible.

At 320, client application 132 detects user input selecting a particular page object 802 in the document pages UI 800. This may be referred to as a page selection user input. The page selection user input may, for example, be a click (or other interaction) on or proximate a particular page object 802 using a cursor control device 224; a tap (or other interaction) on or proximate a particular page object 802 on a touch screen display 218; or an alternative user input with respect to a particular page object 802. The selected page object will correspond to a particular page of the selected document (referred to as the selected page).

At 322, in response to detecting the page selection user input, client application 132 generates a document data request and communicates this to the server application 114. The document data request may include data that allows the selected document to be identified (e.g. a document ID of the document selected at 316). The document data request may also (or alternatively) include data that allows the selected page to be identified (e.g. a page number or other identifier of the page selected at 320).

Turning to FIG. 4, flowchart 450 depicts server side operations performed (in this example, by server application 114) on receiving a document data request.

At 452, the server application 114 receives a document data request from the client application 132.

At 454, in response to receiving the document data request, server application 114 retrieves document data based on the request. Generally speaking, this may involve server application 114 retrieving data from the relevant data storage 118 on which documents are stored (either directly or via a data storage application 116). The document data retrieved by the server application 114 includes at least page data in respect of the selected page - e.g. data that allows the selected page to be displayed by client application 132 in full.

In the present embodiments, server application 114 retrieves page data in respect of all pages of the document that the selected page forms part. In alternative embodiments, however, server application 114 may be configured to retrieve page data in respect of a subset of the document pages - e.g. only the selected page, the selected page as well as *n* preceding/following pages, or an alternative subset. Server application 114 may also retrieve other document data (e.g. additional metadata).

At 456, server application 114 generates a document data response. This will include the document data retrieved from the relevant data storage 118 (and/or data based thereon).

At 458, server application 114 communicates the document data response to the client application 132.

Returning to FIG. 3, at 324 client application 132 receives a document data response from the server application 114. The document data response includes at least page data in respect of the selected page - e.g. data that allows the selected page to be displayed by client application 132 in full. In the present embodiments, the document data includes data that allows all pages of the document that the selected page forms part of to be displayed in full.

At 326, client application 132 displays the selected page in a primary UI. Generally speaking, the primary UI provides additional detail in respect of the selected page and/or additional functionality than is available in either the matching documents UI (displayed at 314) or the document pages UI (displayed at 318). The precise form of the primary UI will, however, depend on the nature of the application/platform in question.

Where the document platform provides editing document editing functionality, the primary UI may be an editor UI. FIG. 10 provides one example of an editor UI 1000 (in this example in the context of a document design application as outlined above).

Example UI 1000 includes a document preview area 1002 on which a canvas 1004 is shown. Canvas 1004 is used to display a page of a document that is being edited. In this example, UI 1000 is initially displayed with the page selected at 320 displayed on canvas 1004 (in this particular example, the page corresponding to page object 802A of FIGs 8 and 9).

Example UI 1000 also includes a page navigation mechanism. In this example, the page navigation mechanism is provided by display of page thumbnails (or previews) 1006. In this example five thumbnails 1006 are provided, corresponding to the five pages of the document selected at 316 (that is, the document corresponding to document object 602C of FIG. 6). Thumbnails 1006 are similar to page objects 802 however in this particular example do not include page match indicators 804 (though these could be displayed). User interaction with a given thumbnail 1006 causes application 132 to display the corresponding page on canvas 1004. If the document data response generated by the server application 114 at 458 and received by the client application at 324 does not include page data for a selected page, selecting that page's thumbnail 1006 will cause the client application 132 to request the relevant page data from the server application 114.

Example UI 1000 also includes an add page control 1008. User interaction selecting the add page control 1008 causes a new page to the added to the document being viewed.

Example UI 1000 also includes a zoom control 1009 which a user can interact with to zoom into/out of the page currently displayed on canvas 1004.

Example UI 1000 also includes an asset preview area 1010. Asset preview area 1010 displays previews 1012 of assets that are made available (e.g. by server environment 110) to users to assist in creating and editing document. Different types of assets may be made available, for example document elements (of varying types - e.g. raster images, vector graphics, shapes, videos, audio clips, and/or other document element), document templates, document styles (e.g. defined sets of colours, font types, and/or other assets/asset parameters), and/or other assets that a user may use when creating or editing a document. For example, a given preview 1012 may be of a document element (e.g. a raster graphic, a vector graphic, a video, an audio track, or an alternative element) and a user may add that document element to the document being edited by dragging and dropping the preview 1012 onto the page displayed on canvas 1004. This causes data in respect of the element to be added to the document's document data (e.g. to the element array of the page the element is added to). Document elements may be added to a document in other ways. In this example, the preview area 1010 displays a scroll control 1014 allowing a user to scroll through previews 1012.

In this example, preview area 1010 also includes an asset search control 1016 via which a user can submit search data (e.g. a string of characters) to search for particular document assets. Previews 1012 of the search results returned are then displayed in the preview area 1010. In this example, a hide preview area control 1018 is provided which can be activated to hide the asset preview area 1010 (serving to enlarge the document preview area 1002).

Depending on implementation, the previews 1012 displayed in asset preview area 1010 (and the document assets corresponding to those previews) may be accessed from various locations. In the present example, the search functionality invoked by search control 1016 causes server application 114 to perform a search of assets that are available to it: e.g. assets stored in a data storage device 118 of the server environment 110. In alternative implementations, when performing a search that has been submitted via search control 1016 the server application 114 (and/or client application 132) may search additional and/or alternative locations, for example: locally accessible data storage (e.g. non-transient memory such as 210 that is part of/connected to client system 130); third party server systems that serve relevant content and are accessed via communications network 140 (e.g. via a general web search or other mechanism); and/or other locations.

Example UI 1000 also includes a type selection area 1020 which displays a plurality of type selection controls 1022. The type selection controls 1022 may be activated by a user to select a type of document asset for which previews 1012 are displayed (and can be searched for) in preview area 1010. By way of example, type selection controls 1022 may be provided for types such as document templates, photos (e.g. raster graphics), vector graphics, text, audio, video, styles, colour palettes, and/or other asset types.

Example UI 1000 also includes an additional controls area 1030 for displaying additional controls 1032. The additional controls 1032 may include permanent controls (e.g. controls such as save, download, print, share, publish, and/or other controls that are frequently used/widely applicable and that application 132 is configured to permanently display); user configurable controls (which a user can select to add to or remove from area 1030), and/or adaptive controls (which may automatically change depending on the type of document element that is currently selected/being interacted with by a user). For example, if a text element that has been added to the page displayed on canvas 1004 is selected, adaptive controls such as font style, type, size, position/justification, and/or other font related controls may be displayed. Alternatively, if a vector graphic element is selected, adaptive controls such as fill attributes, line attributes, transparency, and/or other vector graphic related controls may be displayed.

In example UI 1000, the additional controls area 1030 includes a document search control 1034. Document search control is a further example of a search input UI as described above at 302.

Once a user has finished editing a document they may output the document in various ways. Document output may be initiated by user interaction with an additional control 1032. For example, client application 132 may provide a user with options to output a document by one or more of: saving the document to local memory of client system 130 (e.g. non-transient memory 210); saving the document to data store 118 of server environment 110; printing the document to a printer (local or networked); communicating the document to another user (e.g. by email, instant message, or other electronic communication channel); publishing the document to a social media platform or other service (e.g. by sending the document to a third party server system with appropriate API commands to publish the document); and/or by other output means.

In order to output a document, application 132 may be configured to format or convert the document to an appropriate file type. For example, in the present disclosure a document may include an animation. In order to output such a document application 132 may convert the document from a native format (e.g. the document format used by application 132 itself) to an alternative format, for example to a video format (such as MPEG4, MOV, AVI, or an alternative video format), an animation format (e.g. an animated GIF format), or an alternative format that is appropriate for animations.

It will be appreciated that UI 1000 is provided by way of example, and alternative editor UIs, with alternative layouts and/or that provide alternative tools and functions, are possible.

By way of alternative example, where the document platform is a document viewer platform (that provides no or only basic document editing capabilities), the primary UI may be a viewer UI allowing a full version of the selected page (and/or other pages of the selected document) to be viewed. FIG. 11 provides one example of such a viewer UI 1100.

Example UI 1100 includes a document preview area 1102 in which a document page 1104 is displayed. In this example, UI 1100 is initially displayed with the page selected at 320 displayed (in this example, the page corresponding to page object 802A of FIGs 8 and 9).

Example UI 1100 also includes a page navigation mechanism. In this example, the page navigation mechanism includes a next page control 1106 (which, if selected, causes the next page of the document in question to be displayed) and a previous page control 1108 (which, if selected, causes the next page of the document in question to be displayed). In this particular example, the first page of the document in question is displayed and there is no previous page. Accordingly, the previous page control 1108 is disabled (or simply not displayed), as indicated by broken lines. If the document data response generated by the server application 114 at 458 and received by the client application at 324 does not include page data for a page that a user navigates to, user input navigating to that page will cause the client application 132 to request the relevant page data from the server application 114.

Example UI 1100 also includes a current page indicator 1110. In this example, the current page indicator 1110 indicates both the current page that is displayed (here page 1) and the total number of pages in the document (here 5 pages).

Example UI 1100 also includes a zoom control 1112 which a user can interact with to zoom into/out of the 1104 page currently displayed.

Example UI 1100 also includes an additional controls area 1120 for displaying additional controls 1122. The additional controls 1122 provided may vary. By way of example, additional controls 1122 may be provided for operations such as: rotating the currently displayed page; saving the current document; sharing the current document (e.g. by attaching it to an email or other electronic message); jumping to a particular page of the document; and/or alternative operations.

In this example, additional controls area 1120 includes a document search control 1124. Document search control is a further example of a search input UI as described above at 302.

It will be appreciated that UI 1100 is provided by way of example, and alternative viewer UIs, with alternative layouts and/or that provide alternative tools and functions, are possible.

In certain embodiments, if the document object selected at 316 corresponds to a single page document client application 132 may be configured to bypass display of the document pages UI (at 318) and instead directly request document data at 322 and (on receiving document data) display the primary UI at 326.

In the embodiment described above, the actual document search is performed by server application 114 (and covers documents accessible to server application 114). In alternative implementations, client application 132 may be configured to perform the search at 306 itself. In this case, client application 132 may perform the search on documents that are stored in locally accessible memory (e.g. non-transient memory 210 or an external memory device connected to the system 200 that client application 132 runs on) and/or any remote locations that client application 132 has access to (and has been configured to search). Similarly, in this case client application 132 will not need to request document data for a selected document/page from the server application 114 at 322 and can instead retrieve such data itself. Accordingly, the techniques described herein need not be implemented in a networked environment or require a server application, but may be implemented by a stand-alone application running on a computer processing system.

Additional, specific embodiments of the present disclosure are described in the following clauses by way of non-limiting example:
Clause 1. A computer implemented method including:
   receiving input that defines a search string;
   causing a search to be performed, the search based at least in part on the search string, the search performed on a set of documents so as to identify matching documents and matching pages;
   displaying a matching documents user interface (UI), the matching documents UI including at least one document object, the or each document object corresponding to a matching document identified by the search;
   detecting a document selection user input selecting a particular document object, the particular document object corresponding to a particular matching document that has one or more pages;
   in response to detecting the document selection user input, displaying a document pages user interface (UI), the document pages UI including at least one page object, the or each page object corresponding to a page of the particular matching document;
   detecting a page selection user input selecting a particular page object, the particular page object corresponding to a particular page of the particular matching document; and
   in response to detecting the page selection user input, displaying the particular page in a primary user interface (UI).
Clause 2. The computer implemented method of clause 1, wherein the set of documents is a set of independent page documents, each independent page document including one or more independent pages.
Clause 3. The computer implemented method of clause 1 or clause 2, wherein the particular matching document has one or more matching pages and the particular document object is displayed with a matching page indicator that indicates that the particular matching document has one or more matching pages.
Clause 4. The computer implemented method of clause 1 or clause 2, wherein the particular matching document has one or more matching pages and the particular document object is displayed with a matching page indicator that indicates a number of matching pages that the particular matching document has.
Clause 5. The computer implemented method of any one of clauses 1 to 4, wherein the particular page of the particular matching document is a matching page and the particular page object is displayed with a page match indicator indicating that the particular page is a matching page.
Clause 6. The computer implemented method of any one of clauses 1 to 5, wherein the document pages UI includes a display matching pages control, and the method further includes:
   detecting user input selecting the display matching pages control; and
   in response to detecting the user input selecting the display matching pages control, displaying only page objects that correspond matching pages of the particular matching document.
Clause 7. The computer implemented method of any one of clauses 1 to 6, wherein the document pages UI includes a display all pages control, and the method further includes:
   detecting user input selecting the display all pages control; and
   in response to detecting the user input selecting the display all pages control, displaying page objects that correspond all pages of the particular matching document.
Clause 8. The computer implemented method of any one of clauses 1 to 7, wherein the primary UI is an editor user interface including one or more editing controls for editing the particular page.
Clause 9. The computer implemented method of any one of clauses 1 to 7, wherein the primary UI is a viewer user interface in which a full version of the particular page is displayed.
Clause 10. The computer implemented method of any one of clauses 1 to 9, wherein causing the search to be performed includes generating a search request and communicating the search request to a server application.
Clause 11. A computer processing system including:
   a processing unit;
   an input device;
   a display; and
   a non-transient computer-readable storage medium storing instructions, which when executed by the processing unit, cause the processing unit to perform a method including:
      receiving, via the input device, input that defines a search string;
      causing a search to be performed, the search based at least in part on the search string, the search performed on a set of documents so as to identify matching documents and matching pages;
      displaying, on the display, a matching documents user interface (UI), the matching documents UI including at least one document object, the or each document object corresponding to a matching document identified by the search;
      detecting a document selection user input selecting a particular document object, the particular document object corresponding to a particular matching document that has one or more pages;
      in response to detecting the document selection user input, displaying a document pages user interface (UI), the document pages UI including at least one page object, the or each page object corresponding to a page of the particular matching document;
      detecting a page selection user input selecting a particular page object, the particular page object corresponding to a particular page of the particular matching document; and
      in response to detecting the page selection user input, displaying the particular page in a primary user interface (UI).
Clause 12. The computer processing system of clause 11, wherein the set of documents is a set of independent page documents, each independent page document including one or more independent pages.
Clause 13. The computer processing system of clause 11 or clause 12, wherein the particular matching document has one or more matching pages and the particular document object is displayed with a matching page indicator that indicates that the particular matching document has one or more matching pages.
Clause 14. The computer processing system of clause 11 or clause 12, wherein the particular matching document has one or more matching pages and the particular document object is displayed with a matching page indicator that indicates a number of matching pages that the particular matching document has.
Clause 15. The computer processing system of any one of clauses 11 to 14, wherein the particular page of the particular matching document is a matching page and the particular page object is displayed with a page match indicator indicating that the particular page is a matching page.
Clause 16. The computer processing system of any one of clauses 11 to 15, wherein the document pages UI includes a display matching pages control, and the method further includes:
   detecting user input selecting the display matching pages control; and
   in response to detecting the user input selecting the display matching pages control, displaying only page objects that correspond matching pages of the particular matching document.
Clause 17. The computer processing system of any one of clauses 11 to 16, wherein the document pages UI includes a display all pages control, and the method further includes:
   detecting user input selecting the display all pages control; and
   in response to detecting the user input selecting the display all pages control, displaying page objects that correspond all pages of the particular matching document.
Clause 18. The computer processing system of any one of clauses 11 to 17, wherein the primary UI is an editor user interface including one or more editing controls for editing the particular page.
Clause 19. The computer processing system of any one of clauses 11 to 17, wherein the primary UI is a viewer user interface in which a full version of the particular page is displayed.
Clause 20. The computer processing system of any one of clauses 11 to 19, wherein:
   the computer processing system further includes a communications interface; and
   causing the search to be performed includes generating a search request and communicating the search request to a server application via the communications interface.
Clause 21. A non-transient storage medium storing instructions executable by a processing unit to cause the processing unit to perform the method according to any one of clauses 1 to 10.

The flowcharts illustrated in the figures and described above define operations in a particular order to explain various features. In some cases the operations described and illustrated may be able to be performed in a different order to that shown/described, one or more operations may be combined into a single operation, a single operation may be divided into multiple separate operations, and/or the function(s) achieved by one or more of the described/illustrated operations may be achieved by one or more alternative operations.

The present disclosure provides various user interface examples. It will be appreciated that alternative user interfaces are possible. Such alternative user interfaces may provide the same or similar user interface features to those described and/or illustrated in different ways, provide additional user interface features to those described and/or illustrated, or omit certain user interface features that have been described and/or illustrated.

It will be understood that the embodiments disclosed and defined in this specification extend to alternative combinations of two or more of the individual features mentioned in or evident from the text or drawings. All of these different combinations constitute alternative embodiments of the present disclosure.

The present specification describes various embodiments with reference to numerous specific details that may vary from implementation to implementation. No limitation, element, property, feature, advantage or attribute that is not expressly recited in a claim should be considered as a required or essential feature. Accordingly, the specification and drawings are to be regarded in an illustrative rather than a restrictive sense.

## Claims

1. A computer implemented method including:
receiving input that defines a search string;
causing a search to be performed, the search based at least in part on the search string, the search performed on a set of documents so as to identify matching documents and matching pages;
displaying a matching documents user interface (UI), the matching documents UI including at least one document object, the or each document object corresponding to a matching document identified by the search;
detecting a document selection user input selecting a particular document object, the particular document object corresponding to a particular matching document that has one or more pages;
in response to detecting the document selection user input, displaying a document pages user interface (UI), the document pages UI including at least one page object, the or each page object corresponding to a page of the particular matching document;
detecting a page selection user input selecting a particular page object, the particular page object corresponding to a particular page of the particular matching document; and
in response to detecting the page selection user input, displaying the particular page in a primary user interface (UI).

2. The computer implemented method of claim 1, wherein the set of documents is a set of independent page documents, each independent page document including one or more independent pages.

3. The computer implemented method of claim 1 or claim 2, wherein the particular matching document has one or more matching pages and the particular document object is displayed with a matching page indicator, and wherein the matching page indicator either:
indicates that the particular matching document has one or more matching pages; or indicates a number of matching pages that the particular matching document has.

4. The computer implemented method of any one of claims 1 to 3, wherein the particular page of the particular matching document is a matching page and the particular page object is displayed with a page match indicator indicating that the particular page is a matching page.

5. The computer implemented method of any one of claims 1 to 4, wherein the document pages UI includes a display matching pages control, and the method further includes:
detecting user input selecting the display matching pages control; and
in response to detecting the user input selecting the display matching pages control, displaying only page objects that correspond matching pages of the particular matching document.

6. The computer implemented method of any one of claims 1 to 5, wherein the document pages UI includes a display all pages control, and the method further includes:
detecting user input selecting the display all pages control; and
in response to detecting the user input selecting the display all pages control, displaying page objects that correspond all pages of the particular matching document.

7. The computer implemented method of any one of claims 1 to 6, wherein the primary UI is one of: an editor user interface including one or more editing controls for editing the particular page; or a viewer user interface in which a full version of the particular page is displayed.

8. The computer implemented method of any one of claims 1 to 7, wherein causing the search to be performed includes generating a search request and communicating the search request to a server application.

9. A computer processing system including:
a processing unit;
an input device;
a display; and
a non-transient computer-readable storage medium storing instructions, which when executed by the processing unit, cause the processing unit to perform a method including:
receiving, via the input device, input that defines a search string;
causing a search to be performed, the search based at least in part on the search string, the search performed on a set of documents so as to identify matching documents and matching pages;
displaying, on the display, a matching documents user interface (UI), the matching documents UI including at least one document object, the or each document object corresponding to a matching document identified by the search;
detecting a document selection user input selecting a particular document object, the particular document object corresponding to a particular matching document that has one or more pages;
in response to detecting the document selection user input, displaying a document pages user interface (UI), the document pages UI including at least one page object, the or each page object corresponding to a page of the particular matching document;
detecting a page selection user input selecting a particular page object, the particular page object corresponding to a particular page of the particular matching document; and
in response to detecting the page selection user input, displaying the particular page in a primary user interface (UI).

10. The computer processing system of claim 9, wherein the set of documents is a set of independent page documents, each independent page document including one or more independent pages.

11. The computer processing system of claim 9 or claim 10, wherein the particular matching document has one or more matching pages and the particular document object is displayed with a matching page indicator, and wherein the matching page indicator either: indicates that the particular matching document has one or more matching pages; or indicates a number of matching pages that the particular matching document has.

12. The computer processing system of any one of claims 9 to 11, wherein the particular page of the particular matching document is a matching page and the particular page object is displayed with a page match indicator indicating that the particular page is a matching page.

13. The computer processing system of any one of claims 9 to 12, wherein the document pages UI includes a display matching pages control, and the method further includes:
detecting user input selecting the display matching pages control; and
in response to detecting the user input selecting the display matching pages control, displaying only page objects that correspond matching pages of the particular matching document.

14. The computer processing system of any one of claims 9 to 13, wherein the primary UI is one of: an editor user interface including one or more editing controls for editing the particular page; or a viewer user interface in which a full version of the particular page is displayed.

15. The computer processing system of any one of claims 9 to 14, wherein:
the computer processing system further includes a communications interface; and
causing the search to be performed includes generating a search request and communicating the search request to a server application via the communications interface.
